Europäisches Patentamt

European Patent Office

Office européen des brevets

(19)

(11) Numéro de publication : **0 141 002 B1**

(12) **FASCICULE DE BREVET EUROPÉEN**

(45) Date de publication du fascicule du brevet :
21.01.87

(21) Numéro de dépôt : **83402038.0**

(22) Date de dépôt : **20.10.83**

(51) Int. Cl.⁴ : **B 29 C 47/02**, G 02 B 6/10, H 01 B 7/22, F 16 L 3/00

(54) **Câble autoporteur comprenant un faisceau de conducteurs isolés ou de tubes et parallèlement un filin porteur partiellement dénudé, et filière pour le gainage d'un tel câble.**

(43) Date de publication de la demande :
**15.05.85 Bulletin 85/20**

(45) Mention de la délivrance du brevet :
**21.01.87 Bulletin 87/04**

(84) Etats contractants désignés :
**AT CH DE IT LI**

(56) Documents cités :
**FR-A- 1 178 671**
**GB-A- 692 025**
**GB-A- 1 003 624**
**US-A- 3 263 271**
**US-A- 3 473 986**
**US-A- 3 557 403**

(73) Titulaire : **Bretegnier, Pierre Henri André**
**505 Rue des Moulins Le Gravelot Chaussée d'Ivry**
**F-28260 Anet (FR)**

(72) Inventeur : **Bretegnier, Pierre Henri André**
**505 Rue des Moulins Le Gravelot Chaussée d'Ivry**
**F-28260 Anet (FR)**

(74) Mandataire : **CABINET BONNET-THIRION**
**95 Boulevard Beaumarchais**
**F-75003 Paris (FR)**

## Description

L'invention se rapporte à un câble autoporteur comprenant, outre un faisceau de conducteurs isolés et/ou fibres optiques et/ou ⁻ de tubes conducteurs de fluides, un filin porteur parallèle partiellement dénudé. L'invention a trait en outre à une filière pour le gainage d'un tel câble.

Les câbles qui servent à l'alimentation ou à la télécommande de dispositifs mobiles sur des distances plus ou moins longues, tels que monte-charges, convoyeurs, téléskis, requièrent qu'un filin, capable de supporter la charge du câble et d'empêcher que les allongements sous charge provoquent la rupture de conducteurs du câble, soit adjoint à celui-ci pour le supporter. Il n'est pas souhaitable que le filin soit disposé dans la gaine du câble à côté du faisceau de conducteurs, car aussi bien l'ancrage mécanique du filin que sa mise à la masse pour des raisons de sécurité demandent que le filin porteur soit partiellement dénudé. Une solution classique est de disposer un câble et son filin porteur parallèlement et de disposer à espacement convenable des chapes ou des ligatures pour fixer le filin sur le câble.

Le transport de fluides dans des tubes suspendus se rapproche beaucoup du transport d'énergie électrique ou d'informations dans des câbles suspendus. Outre que les tubes de transport de fluide peuvent se voir assigner un trajet parallèle au trajet de conducteurs électriques ou de fibres optiques, auquel cas l'association en un faisceau unique est indiquée, la suspension d'un tube conducteur de fluide à l'aide d'un filin porteur mis à la masse peut en soi présenter un intérêt, notamment si le fluide est combustible et si le trajet du tube comporte des zones où peuvent régner des champs électriques intenses.

L'expression faisceau n'exclut pas bien entendu que le câble ne comporte qu'un conducteur électrique, ou une fibre optique ou un tube conducteur de fluide.

Bien entendu il serait préférable que le câble soit réalisé avec les attaches de filin venant de fabrication.

L'invention propose un câble autoporteur comprenant, outre une gaine enfermant un faisceau de conducteurs isolés et/ou de fibres optiques et/ou de tubes conducteurs de fluides, un filin porteur parallèle au faisceau et partiellement dénudé, caractérisé en ce que ladite gaine enfermant le faisceau comporte des saillies espacées venues d'extrusion avec la gaine, en forme de chapes fermées autour du filin, chaque chape étant connectée à la gaine par une lame.

On comprendra aisément que les saillies qui forment chapes pour maintenir le filin porteur sont exécutées lors de l'opération de gainage du faisceau de conducteurs, opération conduite par extrusion d'une matière plastique, dans un processus par essence continu. Il en découle que la structure du câble définie ci-dessus ne peut être obtenue qu'en mettant en œuvre une filière d'extrusion spécialisée.

L'invention propose donc également une filière d'extrusion du genre comportant une chambre d'injection alimentée en matière thermoplastique chauffée, avec un canal antérieur pour le passage de conducteurs à gainer, et un embout d'extrusion postérieur d'où sort un câble gainé, destinée à gainer un câble autoporteur comprenant en parallèle un faisceau de conducteurs isolés et/ou fibres optiques et/ou tubes conducteurs de fluides, et un filin porteur partiellement dénudé, par extrusion d'une gaine tubulaire, autour des faisceaux avec des saillies espacées formant chapes pour le filin porteur, filière caractérisée en ce qu'elle comporte deux demi-filières à axes parallèles, la première affectée au faisceau et la seconde au filin, équipées d'embouts circulaires réunis par une fente étendue suivant le plan des axes des demi-filières, et en ce que la seconde demi-filière comprend un clapet à tige tubulaire formant canal antérieur et mobile axialement dans la chambre d'injection entre une position postérieure où il obture l'embout correspondant, et une position antérieure où il dégage cet embout.

On comprend alors que, lorsque le clapet est en position postérieure, seul l'embout de la première demi-filière débite de la matière thermoplastique pour former la gaine autour du faisceau de conducteurs. Par contre, lorsque le clapet est en position antérieure, les deux embouts débitent de la matière thermoplastique en gainant l'un le faisceau, l'autre le filin, les deux formes tubulaires extrudées étant reliées par une lame extrudée par la fente qui relie les embouts. La manœuvre périodique de la tige de clapet, en synchronisme avec le tirage du câble extrudé, assure la formation, à espacements réguliers, des saillies en forme de chapes autour du filin.

De préférence le clapet comporte une tête en couronne de diamètre supérieur à celui de l'embout correspondant, et la chambre de la seconde demi-filière comporte une alimentation postérieure, et un canal de décharge partant de la région antérieure. Ainsi le clapet, en position postérieure, repose sur la tranche antérieure de l'embout, le bord périphérique de la tête venant limiter l'extension de la lame extrudée par la fente entre les embouts. Le passage en position antérieure du clapet est facilité par la présence du canal de décharge, par où peut être évacuée la matière thermoplastique située du côté de la face antérieure de la tête. Par ailleurs l'injection de matière thermoplastique depuis le canal d'injection jusqu'à l'embout s'exécute en arrière du clapet en position antérieure.

Les caractéristiques et avantages de l'invention ressortiront d'ailleurs de la description qui va suivre à titre d'exemple, en référence aux dessins annexés dans lesquels :

la figure 1A représente en perspective un tronçon de câble autoporteur selon l'invention ;

la figure 1B représente le même câble en coupe transversale ;

la figure 2 représente une filière d'extrusion pour le câble des figures 1, en position où le filin porteur reste nu ;

la figure 3 représente partiellement la filière de la figure 2, mais dans la position où le filin porteur est gainé.

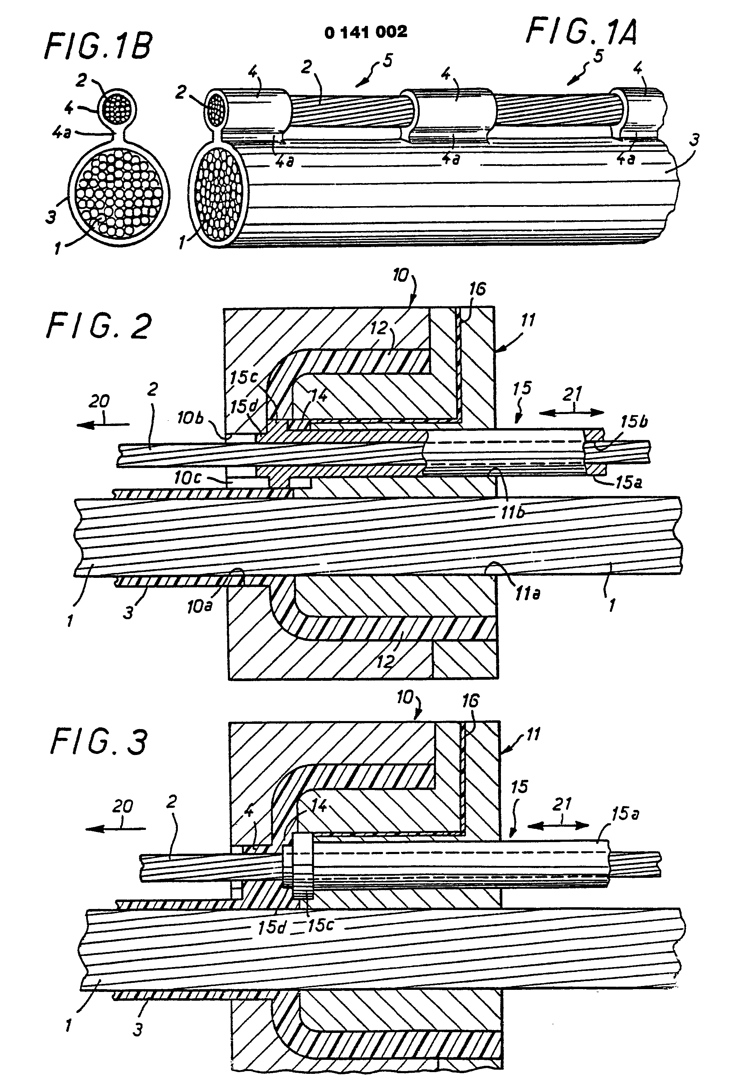

Selon la forme de réalisation choisie et représentée figures 1A et 1B, le câble autoporteur comporte, étendus parallèlement, un faisceau 1 de conducteurs isolés toronnés ensemble, et un filin porteur 2. Une gaine tubulaire extrudée 3 entoure le faisceau 1 et comporte des saillies 4 venues d'extrusion, formant chapes pour le filin porteur 2, et séparées par des intervalles 5 où le filin porteur 2 apparaît à nu. On remarquera que les saillies 4 formant chapes tubulaires s'enracinent dans la gaine 3 par des lames 4a de matière thermoplastique extrudée.

Le faisceau de conducteurs 1 est évidemment quelconque, eu égard au nombre de conducteurs requis pour une application particulière, et à leur section nécessaire. Le filin porteur 2 est formé de brins toronnés ; le nombre de brins, leur section et la matière dont sont constitués ces brins seront choisis par l'homme du métier en fonction des efforts que doit supporter le câble, des fonctions accessoires que doit remplir le filin. Il est clair que les constitutions du faisceau 1 et du filin 2 sont accessoires sous l'aspect du problème à résoudre, ou plus exactement représentent des données du problème qui est l'extrusion de la gaine 3 avec des saillies 4 formant chapes espacées. Sous cet aspect les fibres optiques sont strictement équivalentes à des conducteurs électriques. Il en est de même de tubes conducteurs de fluides, gaz ou liquides, sauf à prendre en compte pour ces derniers le poids du liquide contenu pour la détermination de la constitution du filin porteur 2. Eu égard à ces équivalences entre conducteurs électriques, fibres optiques et tubes conducteurs dans la disposition du faisceau 1, et au caractère accessoire de la constitution de ce faisceau vis-à-vis de la structure du câble, il a semblé inutile de donner des représentations particulières de sections de faisceau 1 selon qu'elles incorporent des conducteurs électriques, des fibres optiques et des tubes conducteurs de fluides.

Par ailleurs, bien que l'expression faisceau évoque de soi une multiplicité de conducteurs électriques, optiques, ou de fluides, il est manifeste qu'ici cette expression ne peut exclure que le faisceau soit constitué par un seul conducteur électrique, une seule fibre optique ou un seul tube conducteur de fluide, eu égard au caractère accessoire de la composition du faisceau pour l'invention.

L'extrusion de la gaine 3, 4 s'exécute à l'aide d'une filière telle que représentée figures 2 et 3, qui sera montée sur le nez d'une extrudeuse classique, non représentée, capable d'alimenter un canal d'alimentation 12 en matière thermoplastique chauffée en sorte d'être fortement visqueuse.

La filière se compose d'un corps 10, en forme générale de coupe, et d'un poinçon-grille 11, qui pénètre dans le corps 10 et en forme obturateur. De façon classique, dans le poinçon 11, on a pratiqué un canal 11a, qui épouse avec un jeu réduit la section du faisceau 1. Dans le corps 10 de filière, en alignement coaxial avec le canal 11a on a usiné un embout 10a, dont la section détermine la section générale du faisceau 1 avec sa gaine 3. Le faisceau sera tiré de droite à gauche selon la représentation des figures 2 et 3, suivant le sens de la flèche 20. Par rapport au sens de tirage du faisceau 1, le canal 11a sera dit canal antérieur, et l'embout 10a embout postérieur. L'espace entre la face postérieure du poinçon 11 et la face antérieure du corps 10, autour du faisceau 1, forme chambre d'injection 14. Toute la partie de la filière adaptée à l'extrusion de la gaine 3 constitue une première demi-filière, classique.

Cependant, pour l'exécution des saillies formant chapes 4, on met en œuvre une seconde demi-filière, d'axe parallèle à la première, que vient traverser le filin porteur 2, qui sera tiré dans le sens de la flèche 20 à la même vitesse que le faisceau 1. Cette demi-filière comporte un embout postérieur 10b usiné dans le corps 10, réuni à l'embout 10a par une fente 10c étendue dans le plan des axes de demi-filières pour être complémentaires des lames 4a (figure 1B notamment).

Par ailleurs dans le poinçon 11 on a usiné un passage cylindrique 11b, coaxial avec l'embout 10b, qui reçoit la tige 15a d'un clapet 15 ; celui-ci est percé axialement d'un canal antérieur 15b où passe à jeu réduit le filin porteur 2. La tête du clapet 5, à l'extrémité postérieure s'évase en couronne 15c, ajustée dans la chambre d'injection 14 ménagée dans la face postérieure du poinçon 11. Au-delà de la couronne 15c, le clapet 15 se prolonge par un anneau 15d susceptible de s'engager dans l'embout 10b de seconde demi-filière lorsque le clapet est en position postérieure comme représenté figure 2.

La chambre 14 est connectée dans sa partie postérieure au canal d'alimentation 12 entre corps 10 et poinçon 11. Un canal de décharge 16 part de la face antérieure de la chambre 14 vers l'extérieur.

Le clapet 15, manœuvré par l'intermédiaire de sa tige 15a qui fait saillie de la face antérieure du poinçon 11, en va-et-vient selon la double flèche 21, peut passer de la position postérieure représentée à la figure 2, où il obture l'embout 10b, à une position antérieure représentée figure 3, où l'embout 10b est dégagé. On remarquera que la tête en couronne 15c, de diamètre supérieur à celui de l'embout 10b, obture sur presque toute sa longueur la fente 10c (figure 2).

Lorsque le clapet 15 est en position postérieure (figure 2), la seconde demi-filière affectée au filin porteur 2 est inutilisée ; lorsque le clapet est en position antérieure (figure 3), la seconde demi-filière est mise en action, l'extrusion commençant lorsque l'anneau 15d s'extrait de l'embout 10b. Comme le débit d'une extrudeuse, sans précautions particulières, est sensiblement volumétrique, le débit de matière nécessaire à la formation des saillies 4 lors de l'opération dans la position antérieure de la figure 3, peut être évacué, dans la position postérieure de la figure 2, à travers le canal de décharge 16, le canal d'alimentation 12 débouchant dans la chambre 14 depuis la face postérieure de celle-ci jusqu'au-delà de l'espace occupé par la tête 15c en position postérieure du clapet. Par ailleurs la communication entre le canal d'alimentation 12 et le canal de décharge 16 est interrompue au moment où le mouvement du clapet 15 vers sa position antérieure dégage l'embout 10b, afin que le début d'extrusion des saillies 4 soit bien formé.

Il va de soi que la tige de clapet est attelée à un vérin latéralement déporté pour dégager le passage du filin 2, et que ce vérin est piloté en va-et-vient par des valves synchronisées sur le mécanisme de tirage du câble gainé, pour que les chapes 4 s'espacent régulièrement le long du filin porteur 2.

Bien entendu l'invention n'est pas limitée aux exemples décrits, mais en embrasse toutes les variantes d'exécution.

## Revendications

1. Câble autoporteur comprenant, outre une gaine (3) enfermant un faisceau (1) de conducteurs isolés et/ou de fibres optiques et/ou de tubes conducteurs de fluides, un filin porteur (2) parallèle au faisceau et partiellement dénudé, caractérisé en ce que ladite gaine (3) enfermant le faisceau (1) comporte des saillies (4) espacées venues d'extrusion avec la gaine (3), en forme de chapes fermées autour du filin (2), chaque chape étant connectée à la gaine par une lame (4a).

2. Filière d'extrusion du genre comportant une chambre d'injection (14) alimentée en matière thermoplastique chauffée, avec un canal antérieur pour le passage de conducteurs à gainer, et un embout d'extrusion postérieur d'où sort un câble gainé, destinée à gainer un câble autoporteur comprenant en parallèle un faisceau (1) de conducteurs isolés et/ou fibres optiques et/ou tubes conducteurs de fluides, et un filin porteur (2) partiellement dénudé, par extrusion d'une gaine tubulaire (3) autour des faisceaux avec des saillies (4) espacées formant chapes pour le filin porteur (2), filière caractérisée en ce qu'elle comporte deux demi-filières à axes parallèles, la première affectée au faisceau (1) et la seconde au filin (2), équipées d'embouts circulaires (10a, 10b) réunis par une fente (10c) étendue suivant le plan des axes des demi-filières, et en ce que la seconde demi-filière comprend un clapet (15) à tige tubulaire (15a) formant canal antérieur (15b) et mobile axialement dans la chambre d'injection (14) entre une position postérieure où il obture l'embout (10b) correspondant, et une position antérieure où il dégage cet embout.

3. Filière selon la revendication 2, caractérisée en ce que ledit clapet comporte une tête (15c) en couronne, de diamètre supérieur à celui de l'embout (10b) correspondant, mobile dans la chambre d'injection (14) correspondante, celle-ci comportant une alimentation (12) postérieure et un canal de décharge (16) partant de la région antérieure de la chambre.

4. Filière selon la revendication 2 ou la revendication 3, caractérisée en ce qu'elle comporte un corps (10) avec une face postérieure où sont ménagés les embouts (10a, 10b) et la fente (10c), et un poinçon-grille (11) où sont ménagés le canal antérieur (11a) de la première demi-filière, et un passage coulissant (11b) pour la tige (15a) de clapet (15).

## Claims

1. A self-supporting cable comprising, besides a sheath (3) enclosing a bunch (1) of insulated conductors and/or optical fibres and/or tubes for conducting fluids, a supporting rope (2) which is parallel to the bunch and which is partially stripped, characterised in that said sheath (3) enclosing the bunch (1) comprises spaced projections (4) produced by extrusion with the sheath (3) in the form of shell portions which are closed around the rope (2), each shell portion being connected to the sheath by a web portion (4a).

2. An extrusion die of the kind comprising an injection chamber (14) supplied with heated thermoplastic material, with a front duct for passage of conductors to be sheathed, and a rear extrusion end portion from which a sheathed cable issues, intended to sheath a self-supporting cable comprising in parallel relationship a bunch (1) of insulated conductors and/or optical fibres and/or tubes for conducting fluids, and a partially stripped supporting rope (2), by extrusion of a tubular sheath (3) around the bunches with spaced projections (4) forming shell portions for the supporting rope (2), the die being characterised in that it comprises two half-dies with parallel axes, the first being associated with the bunch (1) and the second with the rope (2), provided with circular end portions (10a, 10b) joined by a slot (10c) which extends in the plane of the axis of the half-dies, and that the second half-die comprises a valve (15) with a tubular stem (15a) forming a front duct (15b) and movable axially in the injection chamber (14) between a rear position in which it closes off the corresponding end portion (10b) and a front position in which it opens said end portion.

3. A die according to claim 2 characterised in that said valve comprises a ring-like head (15c) of a diameter larger than that of the corresponding end portion (10b), being movable in the corresponding injection chamber (14), said chamber comprising a rear feed (12) and a discharge duct (16) starting from the front region of the chamber.

4. A die according to claim 2 or claim 3 characterised in that it comprises a body (10) with a rear face where there are provided the end portions (10a, 10b) and the slot (10c), and a grid punch (11) in which there are provided the front duct (11a) of the first half-die and a sliding passage (11b) for the stem (15a) of the valve (15).

**Patentansprüche**

1. Selbsttragendes Kabel, das außer einer Hülle (3) ein Bündel (1) von isolierten Leitern und/oder optischen Fasern und/oder fluidleitenden Rohren umfaßt, mit einem dazu parallelen teilweise freiliegenden Zugseil (2), dadurch gekennzeichnet, daß die das Bündel (1) einschließende Hülle (3) über unter Abstand angeordnete in einem Stück mit der Hülle (3) extrudierte Vorsprünge (4) in Form von um das Zugseil (2) geschlossenen Bügeln verfügt, wobei jeder Bügel mit der Hülle über einen Steg (4a) verbunden ist.

2. Extruderdüse der Bauart mit einer Spritzkammer (14), die mit erwärmtem thermoplastischen Material gespeist ist, mit einem Vorkanal für die Durchführung der zu überziehenden Leiter und einem nachgeschalteten Extruderansatz, aus dem ein umhülltes Kabel austritt und dazu bestimmt ist, ein selbsttragendes Kabel zu umhüllen, welches parallel ein Bündel (1) aus isolierten Leitern und/oder optischen Fasern und/oder Fluide führenden Leitern und einem teilweise freiliegenden Trägerzugseil (2) umfaßt, unter Extrusion einer röhrenförmigen Hülle (3) um Bündel mit unter Abstand vorgesehenen Vorsprüngen (4) für das Trägerzugseil (2), dadurch gekennzeichnet, daß die Düse zwei Halbdüsen mit parallelen Achsen umfaßt, wobei die erste dem Bündel (1), die zweite dem Zugseil (2) zugeordnet sind, wobei diese mit kreisförmigen Endstücken (10a, 10b) ausgestattet und über einen Schlitz (10c) vereinigt sind, der sich längs der Ebene der Achsen der Halbdüsen erstreckt und daß die zweite Halbdüse ein (Klappen)ventil (15) mit röhrenförmiger Stange (15a) umfaßt, die einen vorderen Kanal (15b) bildet und axial in der Spritzkammer (14) zwischen einer hinteren Stellung, wo sie den entsprechenden Ansatz oder das entsprechende Endstück (10b) verschließt und einer vorderen Stellung beweglich ist, wo sie dieses Endstück oder diesen Ansatz freigibt.

3. Düse nach Anspruch 2, dadurch gekennzeichnet, daß dieses (Klappen)ventil einen kronenartigen Kopf (15c) von einem Durchmesser größer als dem des entsprechenden Ansatzstückes (10b) umfaßt und in der entsprechenden Spritzkammer (14) beweglich ist, wobei diese eine hintere Speisung (12) sowie einen Auslaßkanal (16) umfaßt, der vom vorderen Bereich der Kammer abgeht.

4. Düse nach Anspruch 2 oder 3, dadurch gekennzeichnet, daß sie ein Gehäuse (10) mit einer rückseitigen Fläche aufweist, wo die Ansätze oder Endstücke (10a, 10b) sowie der Schlitz (10c) sowie ein Gitterstempel (11) ausgespart sind, in dem der vordere Kanal (11a) der ersten Halbdüse und ein Gleitdurchgang (11b) für die Stange (15a) des Ventils (15) ausgespart sind.

FIG.1B

FIG.1A

0 141 002

FIG.2

FIG.3